# EUROPEAN PATENT SPECIFICATION

(11) **EP 0 845 951 B1**
(45) Date of publication and mention of the grant of the patent: **27.03.2002**
(21) Application number: 96928400.9
(22) Date of filing: 30.07.1996
(51) Int. Cl.: A23L 1/00, A23L 1/24, A23D 7/00, A23C 13/12, A23C 15/12, A23C 19/09, A23L 1/302, A23L 1/303, A23G 9/00

(54) **ANTIOXIDANT COMPRISING FOOD PRODUCTS**
ANTIOXIDATIONSMITTEL ENTHALTENDES LEBENSMITTEL
PRODUITS ALIMENTAIRES CONTENANT UN AGENT ANTIOXYDANT

(30) Priority: 21.08.1995 EP 95202252
(43) Date of publication of application: 10.06.1998
(73) Proprietor: UNILEVER N.V., 3013 AL Rotterdam (NL); UNILEVER PLC, London EC4P 4BQ (GB)
(72) Inventor: TIJBURG, Lilian, Bernadette, M., NL-3121 TC Schiedam (NL); WESTSTRATE, Jan, Adriaan c/o Unilever Research, NL-3133 AT Vlaardingen (NL)
(74) Representative: Boerma, Caroline
(86) International application number: EP9603379
(87) International publication number: WO9706697

(56) References cited:
- EP-A- 0 561 744
- WO-A-92/10941
- WO-A-95/05747
- DE-A- 1 924 465
- FR-A- 2 704 397
- GB-A- 2 151 123

## Description

The present invention concerns a food product comprising natural components which increase the antioxidant status in the blood plasma of the consumer if the food product is used according to the common food habits of the consumer.

A high intake of antioxidants has been associated with a decreased risk of cardiovascular disease. Experimental evidence has been published on the basis of which it is assumed that oxidation of lipoproteins is an important step in atherosclerosis and that antioxidants may protect lipoproteins from oxidation. Atheroscleroris is seen as an important cause of death in the Western society.

Food products comprising low levels of components which in themselves are capable of increasing the antioxidant status in the blood plasma of humans are known. Examples of such potential antioxidant components are α-tocopherol (vitamin E), ascorbic acid (vitamin C), and β-carotene. E.g., such components are present in many food products which comprise these components as a natural ingredient. Also, food products to which such components have been added are available on the market. Also the use of such components as separate supplements to the human diet, e.g. in the form of tablets or capsules is known.

EP 561744 describes preparation for preventing cardiovascular diseases, and proposes dose units in the form of a capsule. Such products are of a different type and nature and have a different consumption pattern than the food products of the current invention.

The daily intake of the amounts needed for antioxidant increase is relatively high compared to what is found in food products which comprise no added antioxidants, and none of the food products presently known comprises levels of antioxidants sufficient to significantly increase the antioxidant level in the blood plasma upon the common, average amount of daily intake of the food product except for eating very high amounts of fruits and vegetables.

Accordingly, the intake of such high amounts could, up till now, be taken care of by the intake as a supplement to the human diet (e.g., by the intake of tablets or the like ), or by a specially selected diet.

Consumers these days have a clear preference for food products which form part of their common food habits and which, in themselves, have a clear contribution towards a healthy diet by which no longer additives or a special diet needs to be taken.
The present invention concerns a food product by which this desire can be met. In particular, the present invention aims to provide a food product which is part of the common diet and which comprises antioxidants and/or antioxidant vitamins in amounts sufficient to significantly increase the anti-oxidant status in the human blood plasma. By this invention, the consumer needs not alter his daily consuming habits, while the risk towards atherosclerosis can be reduced by the intake of the food product.
Examples of suitable food products comprising the components in accordance with the invention are fat based food products which form part of the daily diet, such as margarine, halvarine or any other spread; dressings such as mayonnaise, tomato ketchup, and salad dressings; cheese products such as cheese, cheese spread and cheese sauce; sauces; cream, ice cream and the like.
Preferably, the food product of the invention is a spread, dressing, sauce or ketchup.

It is preferred to apply the antioxidant components in products which are used on a daily bases, such as a spread. In that case, the highest benefit is obtained from the present invention. In a further preferred embodiment of the invention, the food product is a yellow fat spread which can comprise 0 (zero) to 90% fat (usually 5-80%).
In another preferred embodiment, the food product is a sauce, e.g. a tomato based sauce, or a ketchup such a tomato ketchup.

The food products as such are common products in the Western world, and are used by consumers on a daily basis in amounts different for each individual. Figures of the average amounts referred to are available to the man skilled in the art.

In this specification, an antioxidant is any substance that, when present at low concentrations compared to those of an oxidizable substrate in the human body, significantly inhibits free radical chain reactions of that oxidizable substrate in the human body. In this specification, where the term antioxidant is used without specifically also mentioning antioxidant vitamin, both antioxidant and antioxidant vitamins are meant.

The amounts to be used in a particular food product are to be chosen such that a significant increase in antioxidant level in the blood plasma of humans is found. The present invention preferably concerns the use of moderate amounts of antioxidants, which means more than the low amounts found in the known products comprising these components is present, but less than about 10 times the lowest amount that provides a significant increase of antioxidant status in the blood plasma. This is much less than what is found in the several publications in which pharmacological amounts are recommended. It has been found that the addition at much lower levels can provide a reduced risk towards atherosclerosis.
The amounts are to be determined on the basis of the average regular or daily intake of the specific product for the specific country where the product is to be applied.

It has been found that for the antioxidant components, the amount present in the daily applied quantity of the food product is at least 3 times the recommended amount (RDA value from the Codex Alimentarius as is recommended in the Western countries). It is preferred to use amounts between 3 and 10 times the recommended amount (RDA value from the Codex Alimentarius) for those antioxidants of which such RDA values are available.

Determination of the amount of each of the antioxidants to be applied takes place by determination of the antioxidant level in the plasma of human beings after daily consumption of the average consumed amount of product after four weeks. The concentration in the blood plasma of the antioxidant applied is measured and compared to the concentration in the plasma of the antioxidant before the four weeks intake of the food product of the invention. In this specification, α-tocopherol, α- and β-carotene levels in plasma were measured using reversed phase HPLC. Ascorbic acid levels were determined by fluorimetric measurement using ascorbate oxidaze as described in "Fluorometric assay of vitamin C in biological materials using a centrifugal analyzer with fluorescence attachment", Vuilleumier JP, Keck E.J Micronutrient Analysis 1989;5:25-34. The method is to be carried out after treatment of fresh plasma with trichloroacetic acid. Other measurements are available as well, but provide less accurate results and due therefore not recommended. (E.g. spectrophotometric measurement, using enzymatic kits from Boehringer (Mannheim, Germany).
Antioxidants which are suitable to significantly increase the antioxidant level in the blood plasma are for example, α-tocopherol (vitamin E), ascorbic acid (vitamin C), polyphenol, and carotenoid such as α-carotene, B-carotene, lycopene, cryptoxanthin, zeaxanthin, and lutein.

The amounts indicated below are amounts per average daily applied amount of the food product it is used in.
In the case of α-tocopherol, the minimum amount to be used will be about 30 mg per amount, and preferably between 30 and 100 mg; for ascorbic acid, the minimum amount will be about 100 mg, and preferably between 120 and 600 mg and further preferred between 180 and 600 mg; and for polyphenols obtained from tea, the minimum applied amount will be about 0.5 g, and preferably between 0.5 and 2.5 g. For other polyphenols, the minimum applied amount will be 25 mg, and preferably between 25 and 125 mg. For carotenoids, the amounts are 2 - 18 mg. It is to be noted here that carrots and maybe some other vegetables contain amounts within this range, but the carotenoids cannot be easily absorbed, and so are not capable of increasing the antioxidant levels in the blood plasma as now claimed. Preferably, the food product comprises 30-80 mg of α-tocopherol per amount of the average daily consumed amount of food product, and/or 120-600 mg and preferably 200-600 mg ascorbic acid, and/or 8-15 mg, preferably 10-15 mg of a (mixture of) carotenoid, and/or 0.7-2.0 g of a (mixture of) a tea polyphenol and/or 50-100 mg of a (mixture of) a polyphenol not being a polyphenol derived from tea.
The food product of the invention suitably comprises at least 8 mg carotenoid, and preferably an amount between 8 and 18 mg per average daily applied amount of the food product. Preferably, the carotenoid is a mixture of α- and β-carotene. The use of a carotenoid has been found to show a very high increase in antioxidant level in the blood plasma.

Preferably, a mixture of at least two of the antioxidants is applied. In particular, it is preferred that the mixture comprises at least a water and a fat soluble antioxidant as applicants have some indications that the water soluble antioxidants are capable of regenerating the fat soluble antioxidants. Thus, food products comprising both water and fat soluble antioxidants are believed to be even more effective. At least, indications therefore for ascorbic acid and α-tocopherol have been noticed.

In a highly preferred embodiment, the food product is a yellow fat spread comprising 30-100 mg per 15 g of spread of α-tocopherol and/or derivatives thereof. More preferred is a spread in which at least both a water soluble and fat soluble antioxidant is present. For example, such a more preferred spread comprises per 15 g of spread 30-100 mg α-tocopherol and/or derivatives thereof, and 100-600 mg ascorbic acid.

Food products providing good benefits to the antioxidant level in the blood plasma, and, more in particular, to the reduction of the lipoprotein oxidation in vitro are for example tomato ketchup which comprises 30-100 mg α-tocopherol and/or derivatives thereof, and 100-600 mg ascorbic acid and 2-18 mg preferably 8-18 mg of a (mixture of) carotenoid, and yellow fat spreads having a fat level between 10 and 80 %, and comprising 30-100 mg of α-tocopherol and/or derivatives thereof, 120-600 mg of ascorbic acid and 8-18 mg of a (mixture of) carotenoid. All amounts indicated above are amounts per average daily consumed amount of the food product. It is preferred that such a spread comprises at least two thereof, preferably the two being α-tocopherol and ascorbic acid.

In another embodiment of the invention also polyphenol is present. Polyphenol is known as such, and has been described in different publications.
The term polyphenols (or phenolics) can be defined chemically as a substance which possesses an aromatic ring bearing one or more hydroxy substituents, including functional derivatives. Reference is made to "Phenolic Compounds in Food", Chi-Tang Ho; Phenolic Compounds in Food and Their Effects on Health II, Am. Chemical Soc., 1992 In this invention the term polyphenols refers to all plant phenolic molecules derived from a plant source with an antioxidant activity and not covered by the terms oryzanol, tocotrienol and tocopherol, e.g. simple phenols and phenolic acids, hydroxycinnamic acid derivatives (e.g coumaric and ferulic acid) and flavonoids.

In the case of the food product of the invention being a fat based food product, the fat that is applied can be any fat, such as dairy fat and/or vegetable fat. However, if fat is present, for health reasons the use of one or more vegetable fat sources is preferred. In particular, the use of liquid fats is preferred. These can be hydrogenated, interesterified, and the like. The fat can be one single fat or a blend.

The use of fat compositions comprising a considerable amount of poly unsaturated fatty acid groups comprising triglycerides (pufa-triglycerides) in addition to the use of the antioxidants is in particular considered highly beneficial. For example, oils of sunflower, safflower, rapeseed, linseed, linola and/or soybean can be used in a preferred embodiment. Also the fat compositions mentioned in Netherlands patent documents no. Nl 143115, NL 178559, NL 155436, NL: 149687, NL 155177, European patent documents EP 41303, EP 209176, EP 249282, and EP 470658 are highly suitable.
If a fat blend is used, it is preferred that it comprises at least 30%, and more preferred at least 45% of polyunsaturated fatty acids, based on the total weight amount of the fat in the fat based food product.
The fluorimetric method is used for analysing the ascorbic acid level.

### Example

A spread was prepared comprising per 100 g of product 200 mg α-tocopherol , 840 mg ascorbic acid and 180 mg palm fruit carotenes (obtained from Quest, Naarden, Holland) (comprising about 18 mg α- and 36 mg β-carotene)

A control margarine of the same composition, with the proviso that no antioxidant was present, was prepared by the same method.

Measurement of the susceptibility of low density lipoprotein (lipoprotein) to oxidation *in vitro* was performed as follows.

Lipoprotein were isolated using density gradient ultracentrifugation. The formation of conjugated dienes during copper-mediated oxidation was monitored continuously at 234 nm. Before the start of the oxidation experiments the lipoprotein samples were diluted to give a final concentration of lipoprotein protein of 50 µg /ml in the assay cuvette. The incubation was carried out at 30°C. The final concentration of copper was 50 µM and that of EDTA 25 µM.

In a parallel comparison trial 31 healthy volunteers were randomised to consume normal daily quantities (15 g) of either a control margarine or a margarine enriched with moderate amounts of the antioxidants.
Per daily serving of antioxidant margarine, an intake of 31 mg α-tocopherol, 121 mg ascorbic acid and 8 mg palm fruit carotenes (comprising 5,3 mg beta carotene and 2,7 mg alpha carotene) was obtained. Eefore and after 4 weeks of margarine consumption, plasma antioxidant levels, total antioxidant activity of low density lipoprotein and the susceptibility of lipoprctein to oxidation in vitro were determined.

Determination of the total antioxidant activity of lipoprotein was performed as follows.
The method is based on the ability of antioxidants within lipoprotein to scavenge the ATBS⁻⁺ radical cation, as detected by a decrease in the absorbancy at 734 nm.

The assay was carried out using a Cobas Fara analyzer. In the protocol devised 250 µl of ATBS/myoglobin reagent in buffer was mixed with 50 µl of Trolox standard or lipoprotein preparation (1.13- 4.52 mg/ml lipoprotein protein), the pipette probe flushed with 20 µl water , then 20 µl of 3.125 mM hydroperoxide (followed by 10 µl of water to flush the probe) added to start the reaction. The incubation volume was thus 350 µl and the final concentrations were: 4.36 µM metmyoglobin, 436 µM ABTS, 180 µM hydrogen peroxide). The reaction was carried out at 30°C. A dose-response standard curve was derived using Trolox standards of 0, 2.86, 5.72, 8.58, 11.44, and 14.30 µM final concentration.

After consuming the antioxidant margarine for 4 weeks the mean plasma concentration of α-tocopherol increased siginifcantly by 14% (P<0.005) and that of plasma ascorbic acid by 10% (P<0.001) as compared to control group values. The plasma concentrations of β-carotene and α-carotene increase 3.4 fold and 14.5 fold, respectively (P<0.0001). Consumption of the fortified margarine significantly increased the resistance of lipoprotein to oxidation (+7%, P<0.033) as compared to baseline values. The total antioxidant activity of lipoprotein increased by 12% (P<0.01) with no significant increase being observed in the control margarine group. Measurements performed at baseline demonstrated a highly significant correlation between lipoprotein α-tocopherol levels and the lipoprotein total antioxidant activity (r=0.87, P<0.0001). It can be concluded the consumption of a margarine fortified with moderate amounts of antioxidants can be used to increase antioxidant status in the blood plasma and lipoprotein of healthy subjects.

Furthermore, it was found that the consumption of a margarine fortified with palm fruit carotenes delivers alpha and beta-carotene to the body with high bioavailability.

Moderate antioxidant enrichment of foods may be an important means of achieving an optimal natural antioxidant status for the prevention of cardiovascular and other diseases.

## Claims

1. Food product being a spread, dressing, sauce, ice cream or ketchup comprising at least two antioxidants and/or antioxidant vitamins, wherein the food product comprises 30-100 mg of α-tocopherol per amount of the average daily consumed amount of food product, and/or 120-600 mg ascorbic acid, and/or 2-18 mg of a carotenoid or a mixture thereof, and/or 0.5-2.5 g of a tea polyphenol or a mixture thereof and/or 25-125 mg of a polyphenol or a mixture thereof not being a polyphenol derived from tea.

2. Food product according to claim 1, wherein the carotenoid comprises one or more of α-carotene, β-carotene, lycopene, cryptoxanthin, zeaxanthin, and lutein.

3. Food product according to claim 1, wherein at least one water soluble antioxidant or antioxidant vitamin and at least on fat soluble antioxidant or antioxidant vitamin is used.

4. Food product according to claim 1, wherein the food product is a yellow fat spread comprising per average daily amount of spread used 30-100 mg α-tocopherol and/or derivatives thereof, 100-600 mg ascorbic acid and 2-18 mg palm fruit carotenes.

5. Food product according to claim 4, wherein the food product is a spread having a fat level between 5 and 80%, and the fat comprises at least 45% of polyunsaturated fatty acids.

6. Use of an antioxidant or antioxidant vitamin for the preparation of a food product according to claim 1.

## Patentansprüche

1. Nahrungsprodukt, das einen Aufstrich, ein Dressing, eine Soße, eine Eiscreme oder Ketchup darstellt, umfasssend mindestens zwei Antioxidationsmittel und/oder Antioxidationsvitamine, worin das Nahrungsprodukt 30 bis 100 mg α-Tocopherol pro Menge der durchschnittlich täglich konsumierten Menge an Nahrungsprodukt und/oder 120 bis 600 mg Ascorbinsäure und/oder 2 bis 18 mg eines Karotinoids oder einer Mischung hiervon und/oder 0,5 bis 2,5 g eines Teepolyphenols oder einer Mischung hiervon und/oder 25 bis 125 mg eines Polyphenols oder einer Mischung hiervon, das kein von Tee abgeleitetes Polyphenol darstellt, aufweist.

2. Nahrungsprodukt nach Anspruch 1, worin das Karotinoid ein oder mehrere von α-Karotin, β-Karotin, Lykopin, Cryptoxanthin, Zeaxanthin und Lutein aufweist.

3. Nahrungsprodukt nach Anspruch 1, worin mindestens ein wasserlösliches Antioxidationsmittel oder Antioxidationsvitamin und mindestens ein fettlösliches Antioxidationsmittel oder Antioxidationsvitamin eingesetzt wird.

4. Nahrungsprodukt nach Anspruch 1, worin das Nahrungsprodukt einen gelben Fettaufstrich darstellt, umfassend pro durchschnittlicher täglicher Menge an eingesetztem Aufstrich 30 bis 100 mg α-Tocopherol und/oder Derivate hiervon, 100 bis 600 mg Ascorbinsäure sowie 2 bis 18 mg Palmfruchtkarotine.

5. Nahrungsprodukt nach Anspruch 4, worin das Nahrungsprodukt einen Aufstrich mit einem Fettgehalt zwischen 5 und 80% darstellt und das Fett mindestens 45% mehrfach ungesättigte Fettsäuren umfaßt,

6. Verwendung eines Antioxidationsmittels oder Antioxidationsvitamins für die Zubereitung eines Nahrungsprodukts nach Anspruch 1.

## Revendications

1. Produit alimentaire qui est une pâte à tartiner, une vinaigrette, une sauce, une crème glacée ou du ketchup, comprenant au moins deux anti-oxydants et/ou vitamines anti-oxydantes, dans lequel le produit alimentaire comprend de 30 à 100 mg d'α-tocophérol par quantité moyenne de produit alimentaire consommée quotidiennement et/ou de 120 à 600 mg d'acide ascorbique et/ou de 2 à 18 mg de caroténoïde ou d'un mélange de ceux-ci et/ou de 0,5 à 2,5 mg d'un polyphénol de thé ou d'un mélange de ceux-ci et/ou de 25 à 125 mg d'un polyphénol ou d'un mélange de ceux-ci qui ne sont pas des polyphénols dérivés du thé.

2. Produit alimentaire selon la revendication 1, dans lequel le caroténoïde comprend un ou plusieurs composés sélectionnés parmi l'α-carotène, le β-carotène, le lycopène, le cryptoxanthine, le zéaxanthine et le lutéine.

3. Produit alimentaire selon la revendication 1, dans lequel on utilise au moins un anti-oxydant ou une vitamine anti-oxydante soluble dans l'eau et au moins un antioxydant ou une vitamine anti-oxydante soluble dans la matière grasse.

4. Produit alimentaire selon la revendication 1, dans lequel le produit alimentaire est une pâte à tartiner grasse jaune comprenant, par quantité moyenne de pâte à tartiner consommée quotidiennement, de 30 à 100 mg d'α-tocophérol et/ou de dérivés de ceux-ci, de 100 à 600 mg d'acide ascorbique et de 2 à 18 mg de carotènes de fruit de palme.

5. Produit alimentaire selon la revendication 4, dans lequel le produit alimentaire est une pâte à tartiner ayant un niveau de matière grasse compris entre 5 et 80 % et dans lequel la matière grasse comprend au moins 45 % d'acides gras polyinsaturés.

6. Utilisation d'un anti-oxydant ou de vitamines anti-oxydantes pour la préparation d'un produit alimentaire selon la revendication 1.
